# EUROPEAN PATENT APPLICATION

(11) **EP 2 530 948 A1**
(43) Date of publication of application: **05.12.2012**
(21) Application number: 12170290.6
(22) Date of filing: 31.05.2012
(51) Int. Cl.: H04N 21/434, H04N 21/43, G11B 27/00

(54) **Method and device for demultiplexing audio & video data of multimedia file**

(30) Priority: 02.04.2012 KR 20120033995; 03.06.2011 CN 201110157744
(71) Applicant: Samsung Electronics Co., Ltd., Suwon-si, Gyeonggi-do, 443-742 (KR)
(72) Inventor: Zhu, Chunbo, Nanjing Jiangsu (CN); Sun, Ye, Nanjing Jiangsu (CN)
(74) Representative: Davies, Robert Ean

(57) **Abstract**

A method and device for demultiplexing audio & video data in a multimedia file are provided. The method includes: setting and updating a maximum synchronization time point according to a preset maximum synchronization time; selecting an output data frame according to a comparison result between the decoding time stamp of the current data frame for each data frame channel in the multimedia file and the maximum synchronization time point in combination with the order of byte offset location values of the current data frames for each data frame channel; and fetching the output data frame via searching a position in the multimedia file according to the byte offset location value of the selected output data frame to obtain an original stream audio and video frame queue.

## Description

### PRIORITY

This application claims priority under 35 U.S.C. §119(a) to Chinese Patent Application No. 201110157744.0, filed on June 3, 2011, in the State Intellectual Property Office and Korean Patent Application No. 10-2012-0033995, filed on April 2, 2012, in the Korean Intellectual Property Office, the disclosures of which are incorporated herein by reference.

### BACKGROUND

### 1. Field

The exemplary embodiments relate to audio & video data processing in a multimedia file, and particularly relate to a method and device for demultiplexing audio & video data in a multimedia file.

### 2. Related Art

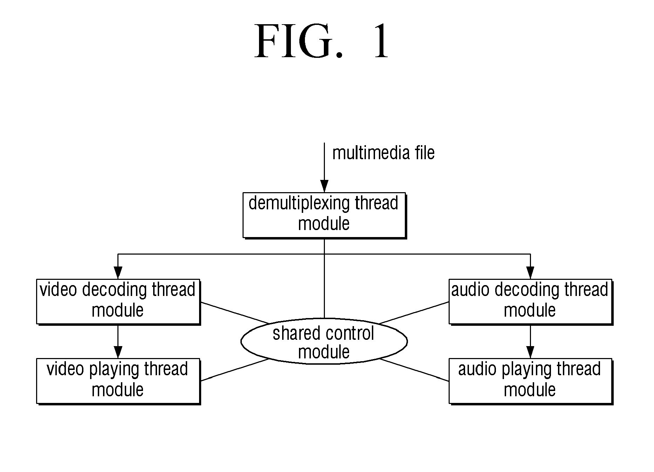

With the improvement of display technologies, a multi-thread media player has been developed. Figure 1 is a schematic diagram illustrating the structure of a multi-thread media player provided in existing technology, which includes a demultiplexing thread module, a video decoding thread module, a video playing thread module, an audio decoding thread module, an audio playing thread module and a shared control module, wherein the shared control module interacts with other thread modules respectively, controlling other thread modules to perform the whole procedure of demultiplexing, decoding and playing the multimedia file.

When the demultiplexing thread module receives a multimedia file, of which the format can be AVI, MP4, 3GP, WMV or MKV, multiple data frames such as audio data frames or video data frames are cached or buffered in the multimedia file. The caching sequence of the audio data frames or video data frames is not the same as the decoding order of these data frames. Therefore, demultiplexing is required to enable the data frames in the multimedia file after demultiplexing to have the same caching sequence as the decoding order. Accordingly, the multimedia file is demultiplexed under the control of the shared control module to output an original stream audio and video frame queue, wherein the queue includes audio data frames and video data frames reordered in accordance with the audio and video decoding order. Under the control of the shared control module, the video decoding thread module decodes the audio data frames out of the original stream audio and video frame queue to obtain a video frame playing queue having a format such as YUV or RGB format, and sends it to the video playing thread module. Then, the video playing thread module plays the video in the video frame playing queue under the control of the shared control module. Under the control of the shared control module, the audio decoding thread module decodes the video data frames out of the original stream audio and video frame queue to obtain an audio frame playing queue having a format such as PCM format, and sends it to the audio playing thread module. Then, the audio playing thread module plays the audio frame playing queue under the control of the shared control module.

In the above process, the demultiplexing thread module is adapted for reordering audio data frames or video data frames of the multimedia file based on decoding time stamps of the audio data frames or video data frames in the multimedia file to get the original stream audio and video frame queue for subsequent audio and video data decoding and playing, to ensure synchronization of decoding and playing.

The multimedia file received by the demultiplexing thread module can cache audio data frames and video data frames in an interleaving form or non-interleaving form, wherein each of the audio data frames and video data frames cached has a decoding time stamp for identification. An index can be carried or not carried in the multimedia file, wherein the index identifies the byte offset location of each data frame and the size thereof for locating each data frame in the multimedia file.

When a multimedia file does not carry an index, whether the audio data frames or video data frames in the multimedia file are interleaved or not, the multimedia file is demultiplexed from front to back according to the caching sequence of each audio data frame or video data frame to get the original stream audio and video frame queue.

When a multimedia file carries an index, the location of each audio data frame or video data frame in the multimedia file can be determined according to the index. Decoding time stamps are ranked in an ascending order, and an original stream audio and video frame queue is obtained via jumping from one cache location of an audio data frame or video data frame in the multimedia file to another according to the order of the decoding time stamps ranked from the smallest to the largest.

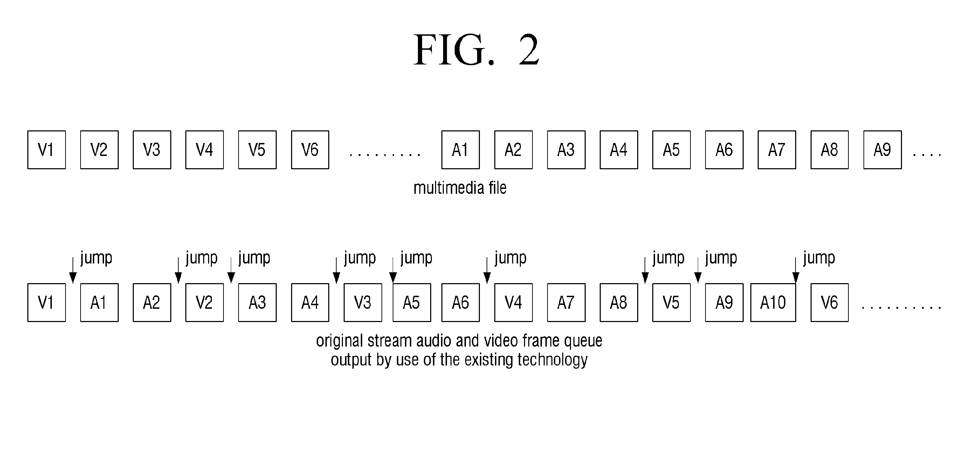

Figure 2 is a schematic diagram illustrating the process of demultiplexing a multimedia file to get the original stream audio and video frame queue when the multimedia file carries an index in the existing technology. As shown in Figure 2, on the top line, the order of audio data frames or video data frames cached in the multimedia file is as follows: video data frame V1, video data frame V2, video data frame V3, ..., audio data frame A1, audio data frame A2, audio data frame A3, .... That is, audio data frames and video data frames are not cached in an interleaving form. The duration of each video data frame is 40 milliseconds, and the duration of each audio data frame is 20 ms. Then, decoding time stamps of the video data frames are 0, 40, 80, 120, ... in sequence, and decoding time stamps of the audio data frames are 0, 20, 40, 60, ... in sequence. During the demultiplexing, it is required to jump from one cache location of an audio data frame or video data frame in the multimedia file to another by use of the index according to the order of the decoding time stamps ranked from the smallest to the largest, to obtain an original stream audio and video frame queue that ranks the decoding time stamps in an ascending order which is shown on the second line of Figure 2. The original stream audio and video frame queue obtained includes: video data frame V1, audio data frame A1, audio data frame A2, video data frame V2, audio data frame A3, audio data frame A4, video data frame V3, audio data frame A5, audio data frame A6, video data frame V4, audio data frame A7, audio data frame A8, .... In Figure 2, jumping occurred in the multimedia file for obtaining the original stream audio and video frame queue is also identified. It can be seen that, for a multimedia file caching data frames in a non interleaving form, or caching data frames in an interleaving form while not caching data frames according to decoding time stamps, a lot of jumps are required during demultiplexing to get the original stream audio and video frame queue.

During the process of demultiplexing the multimedia file, the excessive index locating and jumping operations, especially moving the read pointer of the multimedia file backward and forward frequently for index locating, will lower the demultiplexing speed and reduce the efficiency. Especially, when demultiplexing a remote multimedia file, the operations will bring about network load to a client where the multi-thread media player is located, and even affect subsequent decoding and normal playing of the original stream audio and video frame queue.

### SUMMARY

In view of the above, exemplary embodiments provide a method for demultiplexing audio & video data in a multimedia file, which can increase the efficiency for demultiplexing the multimedia file. The exemplary embodiments also provide a device for demultiplexing audio & video data in a multimedia file, which can increase the efficiency for demultiplexing the multimedia file. The technical schemes of the exemplary embodiments may be implemented as follows.

A method for demultiplexing audio & video data in a multimedia file, includes: setting and updating a maximum synchronization time point according to a preset maximum synchronization time; selecting an output data frame according to a comparison result between a decoding time stamp of a current data frame for each data frame channel in the multimedia file and the maximum synchronization time point in combination with a byte offset location value of the current data frame for each data frame channel; and
fetching the output data frame via searching a position in the multimedia file according to the byte offset location value of the selected output data frame to obtain an original stream audio and video frame queue.

The maximum synchronization time may be preset according to a principle that the maximum number of data frames cached on the original stream audio and video frame queue after demultiplexing is greater than the number of data frames contained within the preset maximum synchronization time.

The process of setting and updating a maximum synchronization time point includes: a1. setting the decoding time stamp of the first data frame in the multimedia file as a current synchronization time point, and taking the sum of the current synchronization time point and the maximum synchronization time as the maximum synchronization time point; b1. comparing the decoding time stamp of the current data frame in each data frame channel and the maximum synchronization time point in accordance with the caching sequence of data frames in the multimedia file; c1. if the decoding time stamps of the current data frames of all the data frame channels are greater than or equal to the maximum synchronization time point, updating the current synchronization time point with the decoding time stamp of a current data frame having the most forward byte position among the current data frames of all the data frame channels, taking the sum of the current synchronization time point and the maximum synchronization time as the maximum synchronization time point and proceeding to step b1; wherein the current data frame of each data frame channel is initially the first data frame within each data frame channel, and if the current data frame of a data frame channel is subsequently output as an output data frame, the next data frame is amended to be a new current data frame.

The process of selecting an output data frame includes: a2. according to the caching sequence of data frames in the multimedia file, comparing the decoding time stamp of the current data frame of each data frame channel and the maximum synchronization time point, and if it is less than the maximum synchronization time point, identifying the current data frame as a candidate data frame for the data frame channel; if it is greater than or equal to the maximum synchronization time point, the candidate data frame within the data frame channel is null; b2. determining whether candidate data frames for all the data frame channels in the multimedia file are null, if not, comparing byte offset location values of the candidate data frames of all the data frame channels in the multimedia file, and outputting a candidate data frame with the minimum value as an output data frame; and if yes, comparing byte offset location values of current data frames for all the data frame channels in the multimedia file, and outputting a minimum data frame as the output data frame; c2. updating the next data frame to be the current data frame of the data frame channel where the output data frame locates, and proceeding to steps a2-c2 for further processing to obtain the selected output data frame.

The process of fetching the output data frame to obtain an original stream audio and video frame queue includes: a3. obtaining a byte offset location value of the output data frame in the multimedia file, wherein the byte offset location value includes a byte offset location and the number of bytes contained; b3. determining whether the sum of the byte offset location of the last output data frame and the number of bytes contained in the last output data frame is equal to the sum of the byte offset location and the number of bytes of the current output data frame, and if yes, the read pointer of the multimedia file is not moved; otherwise, searching a position within the multimedia file, and moving the read pointer of the multimedia file to the byte offset location of the current output data frame; c3. reading the current output data frame from a position pointed by the read pointer of the multimedia file, wherein the size of data being read is the number of bytes of the current output data frame, and outputting the current output data frame; c4. recording the byte offset location and the number of bytes of the current output data frame and taking the current output data frame as the last output data frame, and then taking the next output data frame as the current output data frame and proceeding to steps a3-b3 for further processing to get the original stream audio and video frame queue.

A device for demultiplexing audio & video data in a multimedia file, including: a setting unit, a comparing unit and an output unit; wherein the setting unit is adapted for setting and updating a maximum synchronization time point according to a preset maximum synchronization time; the comparing unit is adapted for choosing an output data frame according to a comparison result between a decoding time stamp of a current data frame for each data frame channel in the multimedia file and the maximum synchronization time point obtained from the setting unit in combination with a byte offset location value of a current data frame for each data frame channel, and sending the output data frame to the output unit; and the output unit is adapted for searching a position within the multimedia file according to the byte offset location value of the output data frame received from the comparing unit, and fetching the output data frame to get an original stream audio and video frame queue.

It can be seen from the above schemes that, an aspect of an exemplary embodiment makes use of a technical feature that a demultiplexed multimedia file caches multiple data frames in an FIFO way in the decoding process. When demultiplexing a multimedia file, the caching sequence of data frames obtained and their decoding order may be different, and it is ensured that the time stamp of the last data frame among the data frames currently cached is less than or equal to the sum of the time stamp of the first data frame and the preset cache time for caching multiple data frames. In this way, an audio data frame or video data frame to be decoded can be found from the data frames currently cached in a follow-up decoding process, and the synchronization performance of decoding can be guaranteed. Based on this principle, an aspect of an exemplary embodiment sets a maximum synchronization time, wherein the number of data frames cached within the maximum synchronization time is less than or equal to the number of data frames cached in the demultiplexing process. The maximum synchronization time point is updated in real time according to the preset maximum synchronization time and decoding time stamps of current data frames of each data frame channel in the multimedia file. Then, a current output data frame is selected according to a comparison result between decoding time stamps of current data frames for each data frame channel in the multimedia file and the maximum synchronization time point in combination with byte offset location values in the index. Finally, the original stream audio and video frame queue is obtained via jumping in the multimedia file according to the offset value of the current output data frame in the index. Thus, the number of times for performing index locating and jumping is decreased when transferring a multimedia file into an original stream audio and video frame queue. Therefore, the method and device provided may improve the efficiency for demultiplexing a multimedia file.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 shows a multi-thread media player provided according to existing technology;
Figure 2 is a schematic diagram illustrating the process of demultiplexing the multimedia file carrying an index into an original stream audio and video frame queue in the existing technology;
Figures 3A-3D are flow charts illustrating the method for demultiplexing audio & video data in the multimedia file according to aspects of an exemplary embodiment;
Figure 4 is a schematic diagram illustrating the structure of a device for demultiplexing audio & video data in the multimedia file according to an aspect of an exemplary embodiment;
Figures 5A and 5B show a flow chart illustrating the method for demultiplexing audio & video data in the multimedia file according an exemplary embodiment;
Figure 6 is a schematic diagram illustrating a process of demultiplexing the multimedia file carrying an index into an original stream audio and video frame queue according to an aspect of an exemplary embodiment;
Figure 7 is a schematic diagram illustrating a process of demultiplexing the multimedia file carrying an index into a second original stream audio and video frame queue according to an aspect of an exemplary embodiment; and
Figure 8 is a schematic diagram illustrating a comparison between efficiencies of demultiplexing a multimedia file by use of the method provided and by use of the method of the existing technology.

### DESCRIPTION OF THE EXEMPLARY EMBODIMENTS

In order to make the purpose, technical schemes and advantages of the present invention more clear, the present invention is further described in detail hereinafter with reference to drawings and exemplary embodiments.

It can be seen from the existing technology that, the reason jumping is required so many times during demultiplexing to get the original stream audio and video frame queue for a multimedia file caching data frames in a non interleaving form, or a multimedia file caching data frames in an interleaving form while not caching data frames according to decoding time stamps is that: the original stream audio and video frame queue is obtained via ranking data frames of the multimedia file according to their decoding time stamps from the smallest to the largest. The original stream audio and video frame queue obtained in this manner may require many index locating and jumping operations when compared with a multimedia file without multiplexing, which will result in lowering the demultiplexing speed and reducing the efficient.

To address the aforementioned problems, a demultiplexed multimedia file caches multiple data frames according to a first in first out (FIFO) method in the decoding process. When demultiplexing a multimedia file, the caching sequence of data frames obtained and their decoding order may be different, and it is ensured that the time stamp of the last data frame among the data frames currently cached is less than or equal to the sum of the time stamp of the first data frame and the preset cache time for caching multiple data frames. In this way, an audio data frame or video data frame to be decoded can be found from the data frames currently cached in a follow-up decoding process, and the synchronization performance of decoding can be guaranteed.

The data frames cached in the multimedia file include audio data frames and video data frames, and one method of caching is to cache several audio data frames subsequent to several video data frames and then in turn cache video data frames and audio data frames. Another method of caching is to first cache several audio data frames and then cache several video data frames. For the purpose of description, multiple audio data frames cached together or multiple video data frames cached together are called a data frame channel, such as an audio data frame channel or a video data frame channel. There are multiple audio data frame channels and multiple video data frame channels in a multimedia file, which are called multiple data frame channels in general.

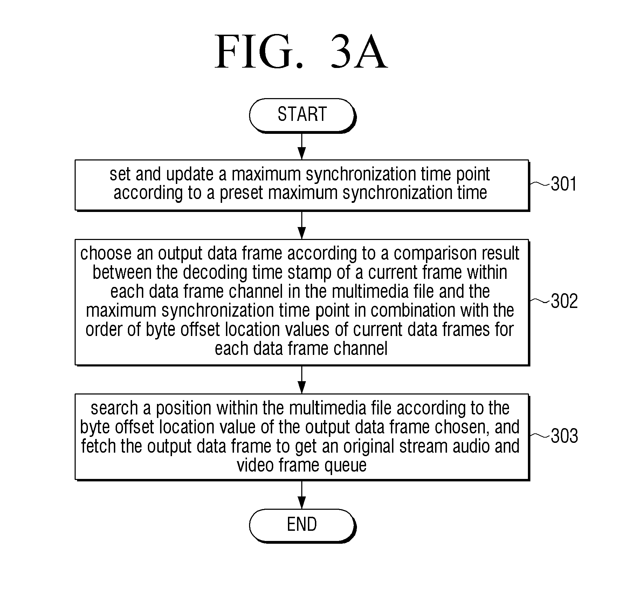

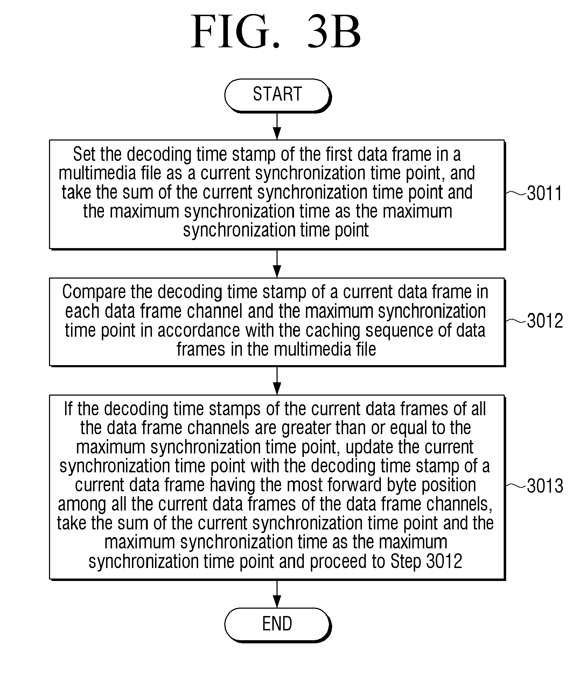

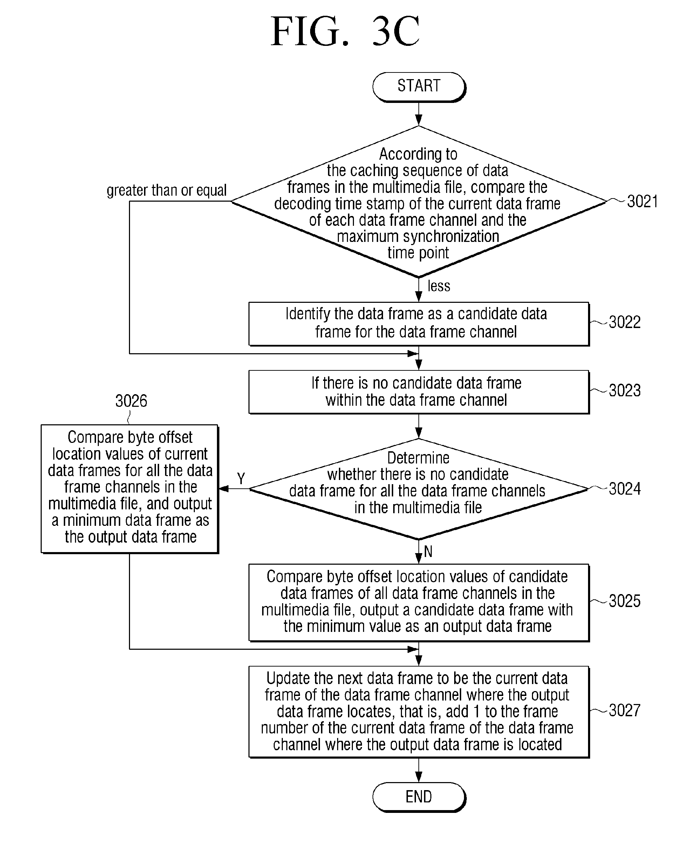

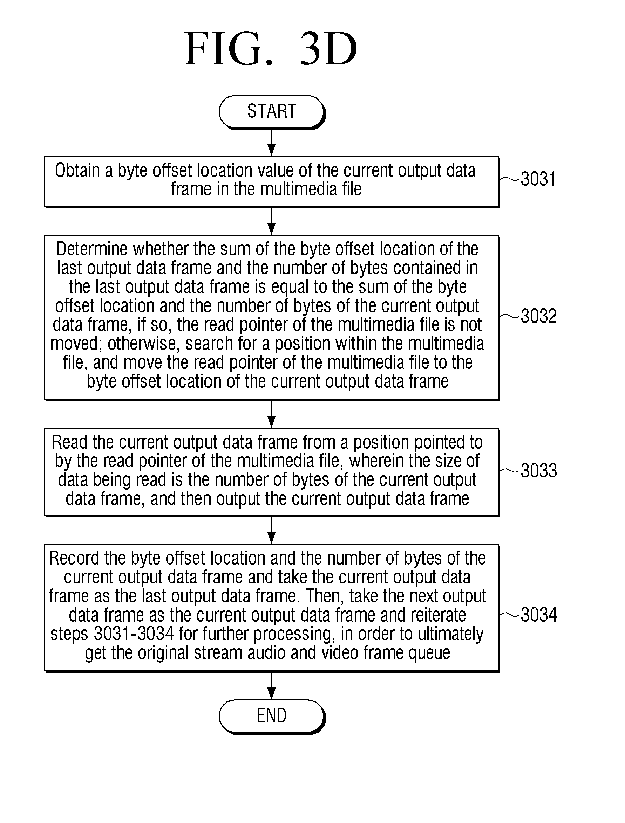

Figure 3 is a flow chart illustrating a method for demultiplexing audio & video data in a multimedia file according to an aspect of an exemplary embodiment, which includes the following specific steps.

Step 301: Set and update a maximum synchronization time point according to a preset maximum synchronization time.

In this step, the preset maximum synchronization time is the longest synchronization time allowable to sequentially read data frames from a multimedia file. The maximum synchronization time can be set based on the configuration of a multi-thread media player, and a setting principle is that the maximum number of data frames cached in the original stream audio and video frame queue after demultiplexing is greater than the number of data frames contained in the preset maximum synchronization time.

The process of updating the maximum synchronization time point in real time includes the following steps.

Step 3011: Set the decoding time stamp of the first data frame in a multimedia file as a current synchronization time point, and take the sum of the current synchronization time point and the maximum synchronization time as the maximum synchronization time point.

Step 3012: Compare the decoding time stamp of a current data frame in each data frame channel and the maximum synchronization time point in accordance with the caching sequence of data frames in the multimedia file.

Step 3013: If the decoding time stamps of the current data frames of all the data frame channels are greater than or equal to the maximum synchronization time point, update the current synchronization time point with the decoding time stamp of a current data frame having the most forward byte position among all the current data frames of the data frame channels, take the sum of the current synchronization time point and the maximum synchronization time as the maximum synchronization time point and proceed to Step 3012.

Initially, the current data frame of each data frame channel is the first data frame within each data frame channel. If the current data frame of a data frame channel is output as an output data frame, the next data frame is amended to be a new current data frame.

Step 302: Choose an output data frame according to a comparison result between the decoding time stamp of a current data frame within each data frame channel in the multimedia file and the maximum synchronization time point in combination with the order of byte offset location values of current data frames for each data frame channel.

Step 303: Search a position within the multimedia file according to the byte offset location value of the output data frame chosen, and fetch the output data frame to get an original stream audio and video frame queue.

In the process of Figure 3, step 302 includes the following specific steps.

Step 3021: According to the caching sequence of data frames in the multimedia file, compare the decoding time stamp of the current data frame of each data frame channel and the maximum synchronization time point. If it is less than the maximum synchronization time point, proceed to step 3022; if it is greater than or equal to the maximum synchronization time point, proceed to step 3023.

Step 3022: Identify the data frame as a candidate data frame for the data frame channel, and proceed to step 3024.

Step 3023: If there is no candidate data frame within the data frame channel, proceed to step 3024.

Step 3024: Determine whether there is no candidate data frame for all the data frame channels in the multimedia file, if not, proceed to step 3025; and if yes, proceed to step 3026.

Step 3025: Compare byte offset location values of candidate data frames of all data frame channels in the multimedia file, output a candidate data frame with the minimum value as an output data frame, and proceed to step 3027.

Step 3026: Compare byte offset location values of current data frames for all the data frame channels in the multimedia file, and output a minimum data frame as the output data frame and proceed to step 3027.

Step 3027: Update the next data frame to be the current data frame of the data frame channel where the output data frame locates, that is, add 1 to the frame number of the current data frame of the data frame channel where the output data frame is located, and reiterate steps 3021 to 3027 for further processing.

In Figure 3, step 303 includes the following specific steps.

Step 3031: Obtain a byte offset location value of the current output data frame in the multimedia file.

In this step, the multimedia file carries an index, and the byte offset location of each data frame in the multimedia file. The number of bytes contained in each data frame is indicated in the index, which are called a byte offset location value capable of being acquired from the index.

Step 3032: Determine whether the sum of the byte offset location of the last output data frame and the number of bytes contained in the last output data frame is equal to the sum of the byte offset location and the number of bytes of the current output data frame, if so, the read pointer of the multimedia file is not moved; otherwise, search for a position within the multimedia file, and move the read pointer of the multimedia file to the byte offset location of the current output data frame.

Step 3033: Read the current output data frame from a position pointed to by the read pointer of the multimedia file, wherein the size of data being read is the number of bytes of the current output data frame, and then output the current output data frame.

Step 3034: Record the byte offset location and the number of bytes of the current output data frame and take the current output data frame as the last output data frame. Then, take the next output data frame as the current output data frame and reiterate steps 3031-3034 for further processing, in order to ultimately get the original stream audio and video frame queue.

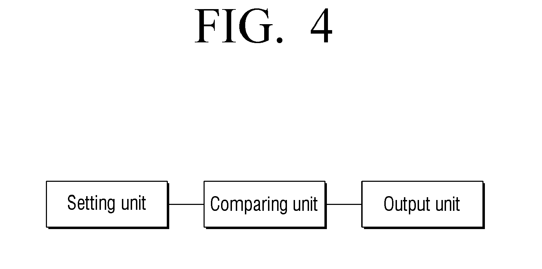

Figure 4 is a schematic diagram illustrating the structure of a device for demultiplexing audio & video data in the multimedia file according to an exemplary embodiment, which includes: a setting unit, a comparing unit and an output unit that each may be implemented using a processer.

The setting unit is adapted for setting and updating a maximum synchronization time point according to a preset maximum synchronization time.

The comparing unit is adapted for choosing an output data frame according to a comparison result between a decoding time stamp of a current data frame for each data frame channel in the multimedia file and the maximum synchronization time point obtained from the setting unit in combination with an order of byte offset location values of current data frames for each data frame channel, and sending the output data frame to the output unit. The output unit is adapted for searching a position within the multimedia file according to the byte offset location value of the output data frame received from the comparing unit, and fetching the output data frame to get an original stream audio and video frame queue.

A specific example is given hereinafter for illustrating a method according to an exemplary embodiment in more detail.

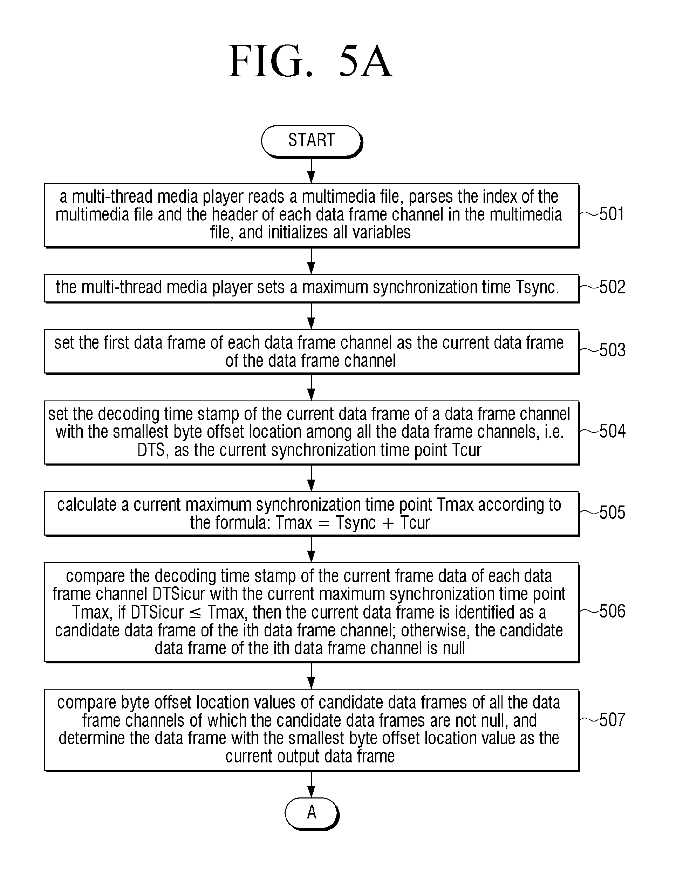

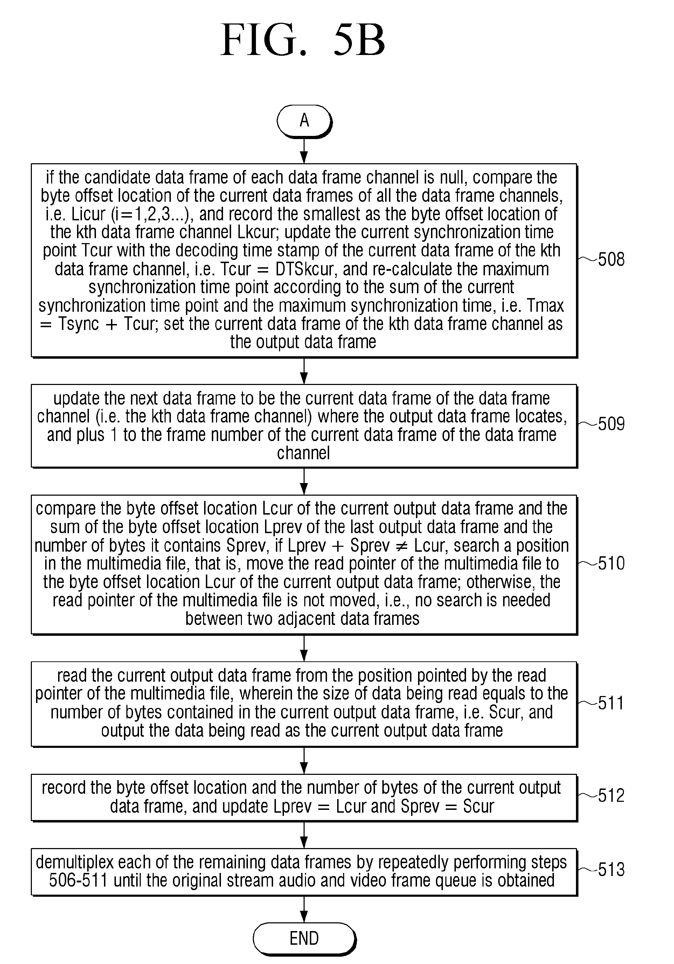

Figures 5A and 5B show a flow chart illustrating the method for demultiplexing audio & video data in a multimedia file according to an aspect of an exemplary embodiment, which includes the following specific steps.

Step 501: A multi-thread media player reads a multimedia file, parses the index of the multimedia file and the header of each data frame channel in the multimedia file, and initializes all variables.

Step 502: The multi-thread media player sets a maximum synchronization time (Tsync).

Step 503: Set the first data frame of each data frame channel as the current data frame of the data frame channel. In this step, i is used for denoting the ith data frame channel among all the data frame channels, wherein i=1, 2, 3 ....

Step 504: Set the decoding time stamp of the current data frame of a data frame channel with the smallest byte offset location among all the data frame channels, i.e. DTS, as the current synchronization time point (Tcur).

Step 505: Calculate a current maximum synchronization time point (Tmax) according to the formula: Tmax = Tsync + Tcur.

Step 506: Compare the decoding time stamp of the current frame data of each data frame channel (DTSicur) with the current maximum synchronization time point Tmax, if DTSicur ≤ Tmax, then the current data frame is identified as a candidate data frame of the ith data frame channel; otherwise, the candidate data frame of the ith data frame channel is null.

Step 507: Compare byte offset location values of candidate data frames of all the data frame channels of which the candidate data frames are not null, and determine the data frame with the smallest byte offset location value as the current output data frame.

Step 508: If the candidate data frame of each data frame channel is null, compare the byte offset location of the current data frames of all the data frame channels, i.e. Licur (i=1,2,3...), and record the smallest as the byte offset location of the kth data frame channel (Lkcur); update the current synchronization time point Tcur with the decoding time stamp of the current data frame of the kth data frame channel, i.e. Tcur = DTSkcur, and re-calculate the maximum synchronization time point according to the sum of the current synchronization time point and the maximum synchronization time, i.e. Tmax = Tsync + Tcur; set the current data frame of the kth data frame channel as the output data frame.

Step 509: Update the next data frame to be the current data frame of the data frame channel (i.e. the kth data frame channel) where the output data frame is located, and add 1 to the frame number of the current data frame of the data frame channel.

Step 510: Compare the byte offset location (Lcur) of the current output data frame and the sum of the byte offset location (Lprev) of the last output data frame and the number of bytes it contains (Sprev), if Lprev + Sprev ≠Lcur, search for a position in the multimedia file, that is, move the read pointer of the multimedia file to the byte offset location Lcur of the current output data frame; otherwise, the read pointer of the multimedia file is not moved, i.e., no search is needed between two adjacent data frames.

Step 511: Read the current output data frame from the position pointed by the read pointer of the multimedia file, wherein the size of data being read equals to the number of bytes contained in the current output data frame, i.e. Scur, and output the data being read as the current output data frame.

Step 512: Record the byte offset location and the number of bytes of the current output data frame, and update Lprev = Lcur and Sprev = Scur.

Step 513: Demultiplex each of the remaining data frames by repeatedly performing steps 506-511 until the original stream audio and video frame queue is obtained.

The original stream audio and video frame queue shown the second line of Figure 2 in the existing technology is obtained via jumping among caching positions of audio data frames or video data frames in a multimedia file in accordance with the order of decoding time stamps ranked from the smallest to the largest, without considering the caching mechanism of the original stream audio and video frame queue. Since a certain number of data frames can be cached in the subsequent decoding process, data frames may not be read strictly in accordance with the order of decoding time stamps from the smallest to the largest, but continuously reads 2N audio data frames after a successive reading of N video data frames without affecting the synchronization performance for decoding the original stream audio and video frame queue. Here, N can be calculated via dividing the maximum synchronization time preset by the duration time of each video data frame, and specifically N = 200/40 = 5 in an example.

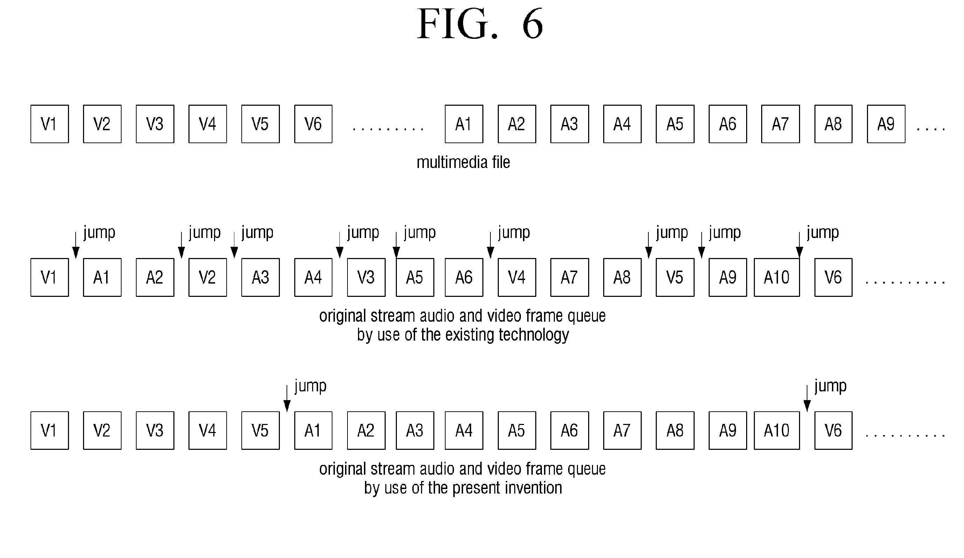

Figure 6 is a schematic diagram illustrating a process of demultiplexing the multimedia file carrying an index into a first original stream audio and video frame queue according to an aspect of an exemplary embodiment. Each part of Figure 6 has the same meaning as that of Figure 2. In Figure 6, the maximum synchronization time is set as 200 ms. Therefore, after 5 video data frames are subsequently read, a jumping is performed to read 10 audio data frames, and then another jumping is performed to read a follow-up 5 video data frames, and so forth. The original stream audio and video frame queue obtained is as shown in the third line of Figure 6. It can be seen from Figure 6 that, in such a multimedia file including a large amount of video data frames and audio data frames, the jump frequency for demultiplexing the multimedia file is approximately 2 times per 15 data frames, while the jump frequency for demultiplexing the multimedia file is approximately 10 times every 15 data frames in the existing technology, thus saving about 80% of the number of times for jumping, which greatly improves the demultiplexing efficiency of the multi-thread media player.

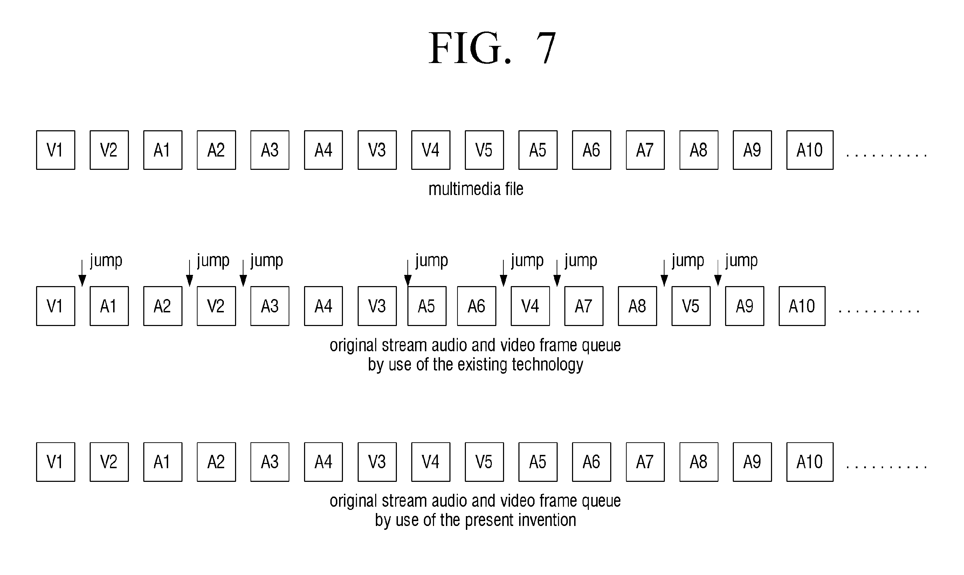

It should be noted that the adaptive interleaving characteristic of the exemplary embodiments are not to select from the multimedia file a fixed number of audio data frames or video data frames continuously read, but to make the determination adaptively according to the caching sequence of audio data frames or video data frames in the multimedia file and a comparison result between decoding time stamps and the maximum synchronization time point. Therefore, the method provided herein is applicable for demultiplexing a multimedia file in an interleaving form, in a non-interleaving form, or in an improperly interleaved form. As shown in Figure 7, Figure 7 is a schematic diagram illustrating a process of demultiplexing the multimedia file carrying an index into a second original stream audio and video frame queue according to an aspect of an exemplary embodiment, wherein the multimedia file is not interleaved properly. Then, no jumping is needed when using the method provided in the exemplary embodiments to demultiplex the multimedia file, thereby saving 100% of the jumping number.

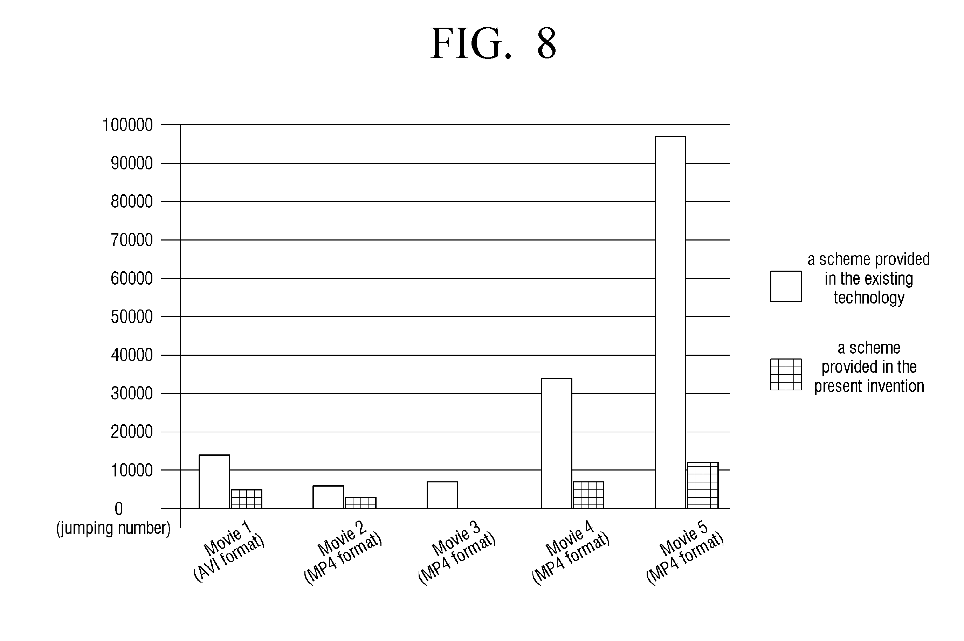

Figure 8 is a schematic diagram illustrating a comparison between efficiencies of demultiplexing a multimedia file by use of the method provided in the exemplary embodiments and by use of the method of the existing technology. As shown in Figure 8, five movies are chosen as multimedia files. Methods provided in the exemplary embodiments and in the existing technology are adopted for demultiplexing respectively, and a comparison result of the jumping number for a multimedia file is shown via a histogram wherein the detailed data are described in Table 1. In the embodiment, the maximum synchronization time is set as 200 ms, wherein an AVI file for movie 1 and an MP4 file for movie 2 are non-interleaving multimedia files and other movies are multimedia files not interleaved properly. It can be seen from the result that, the exemplary embodiments can save 65% to 100% on the jumping number for a multimedia file, which greatly improves the demultiplexing efficiency of a multi-thread media player.

**Table 1**

| | Movie 1 (AVI Format) | Movie 2 (MP4 Format) | Movie 3 (MP4 Format) | Movie 4 (MP4 Format) | Movie 5 (MP4 Format) |
|---|---|---|---|---|---|
| The Jumping Number of the Conventional Method. | 14306 | 5088 | 7943 | 35358 | 97507 |
| The jumping number of the exemplary embodiments. | 4917 | 692 | 0 | 6656 | 10525 |
| The percentage of jumping number of the exemplary embodiments relative to the existing method. | 65.6% | 86.4% | 100% | 81.2% | 89.2% |

It can be seen from the exemplary embodiments that, the an effect of the exemplary embodimentsto the multi-thread media player is to greatly reduce the number of times for the multi-thread media player to perform search locating and jumping when using the index to demultiplex a multimedia file, wherein the number of jumps is reduced by 65% or more and up to 100%. Therefore, the exemplary embodiments can improve the speed and efficiency of demultiplexing a multimedia file. Especially, when playing a non-interleaving multimedia file containing an index under a specific network environment (such as DLNA) or in a CD-ROM, the multimedia file cannot be played normally and smoothly due to the slow demultiplexing speed by use of the existing technology, while the multimedia file can be played normally and smoothly by use of the exemplary embodiments. In addition, the exemplary embodiments also have a high adaptability to a variety of multimedia file formats including an index, such as AVI, MP4, MOV, 3GP, ASF, and MKV, etc.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, while not required in all aspects, one or more units of the device for demultiplexing audio and video data of the multimedia file can include a processor or microprocessor executing a computer program stored in a computer-readable medium.

While the inventive concept has been particularly shown and described with reference to exemplary embodiments thereof, it will be understood by those of ordinary skill in the art that various changes in form and details may be made therein without departing from the spirit and scope of the inventive concept as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for de-multiplexing audio and video data of a multimedia file, the method comprising:
(a) setting and updating a maximum synchronization time point according to a preset maximum synchronization time;
(b) selecting an output data frame according to a comparison result between the maximum synchronization time point associated with a byte offset location value of a current data frame for each data frame channel and a decoding time stamp of the current data frame for each data frame channel of the multimedia file; and
(c) fetching the output data frame by searching for a position in the multimedia file according to a byte offset location value of the selected output data frame to obtain an original stream audio and video frame queue.

2. The method as claimed in claim 1, wherein the maximum synchronization time is preset according to a principle that a maximum number of data frames cached on the original stream audio and video frame queue after de-multiplexing is greater than a number of data frames contained in the preset maximum synchronization time.

3. The method as claimed in claim 1 or 2, wherein operation (a) comprises:
(a1) setting a decoding time stamp of a first data frame in the multimedia file as a current synchronization time point, and taking a sum of the current synchronization time point and the maximum synchronization time as the maximum synchronization time point; and
(a2) comparing the decoding time stamp of the current data frame for each data frame channel and the maximum synchronization time point in accordance with a caching sequence of the data frames of the multimedia file.

4. The method as claimed in claim 3, wherein operation (a) further comprises (a3), if the decoding time stamps of the current data frames of all of the data frame channels are greater than or equal to the maximum synchronization time point as a result of the comparing in operation (a2), updating the current synchronization time point with a decoding time stamp of a current data frame having a most forward byte position among from all of the current data frames of the data frame channels, taking a sum of the current synchronization time point and the maximum synchronization time as the maximum synchronization time point, and then proceeding with operation (a2).

5. The method as claimed in claim 4, wherein, in operation (a), the current data frame for each data frame channel is the first initial data frame in each data frame channel, and if the current data frame of the data frame channel is subsequently output as the output data frame, a next data frame is amended to be a new current data frame.

6. The method as claimed in claim 5, wherein operation (b) further comprises (b1) comparing the decoding time stamp of the current data frame for each data frame channel and the maximum synchronization time point according to the caching sequence of the data frames in the multimedia file.

7. The method as claimed in claim 6, wherein operation (b) further comprises (b2), if the decoding time stamp is less than the maximum synchronization time point as a result of the comparing in operation (b1), determining the data frame to be a candidate data frame for the data frame channel, and, if the decoding time stamp is greater than or equal to the maximum synchronization time point, making a candidate data frame in the data frame channel null.

8. The method as claimed in claim 6, wherein operation (b) further comprises (b3) determining whether candidate data frames for all of the data frame channels in the multimedia file are null or not, if not, comparing byte offset location values of the candidate data frames of all of the data frame channels in the multimedia file and outputting a candidate data frame having a minimum value as the output data frame, and, if the candidate data frames of all of the data frame channels in the multimedia file are null, comparing the byte offset location values of the current data frames for all of the data frame channels in the multimedia file and outputting a maximum data frame as the output data frame.

9. The method as claimed in claim 7, wherein operation (b) further comprises (b4) updating the next data frame to be the current data frame of the data frame channel where the output data frame is located and proceeding with operations (a2)-(c2) for further processing to obtain the selected output data frame.

10. The method as claimed in claim 9, wherein operation (c) further comprises (c1) obtaining a byte offset location value of a current output data frame in the multimedia file,
wherein the byte offset location value comprises a byte offset location of bytes contained and a number of bytes contained.

11. The method as claimed in claim 10, wherein operation (c) further comprises (c2) determining whether a sum of a byte offset location of a last output data frame and a number of bytes contained in the last output data frame is equal to a sum of the byte offset location and the number of bytes of the current output data frame, if the sum of the last output data frame is equal to the sum of the current output data frame, not moving a read pointer of the multimedia file, and, if not, searching for a position in the multimedia file and moving the read pointer of the multimedia file to the byte offset location of the current output data frame.

12. The method as claimed in claim 11, wherein operation (c) further comprises (c3) reading out the current output data frame from a position pointed by the read pointer of the multimedia file and then outputting the current output data frame.

13. The method as claimed in claim 11, wherein operation (c) further comprises (c4) recording the byte offset location and the number of bytes of the current output data frame and taking the current output data frame as the last output data frame, and then taking a next output data frame as the current output data frame and proceeding with operations (c1)-(c2) for further processing to obtain the original stream audio and video frame queue.

14. An apparatus for de-multiplexing audio and video data of a multimedia file, the apparatus comprising:
a setting unit which sets and updates a maximum synchronization time point according to a preset maximum synchronization time;
a comparing unit which selects an output data frame according to a comparison result between the maximum synchronization time point associated with a byte offset location value of current data frame for each data frame channel and a decoding time stamp of the current data frame for each data frame channel of the multimedia file; and
an output unit which searches for a position in the multimedia file according to a byte offset location value of the output data frame received from the comparing unit and fetches the
output data frame to obtain an original stream audio and video frame queue.
